# EUROPEAN PATENT SPECIFICATION

(11) **EP 0 840 678 B1**
(45) Date of publication and mention of the grant of the patent: **02.05.2003**
(21) Application number: 96922331.2
(22) Date of filing: 25.06.1996
(51) Int. Cl.: B32B 27/08, B65D 65/40, B65B 55/06

(54) **Method for manufacturing a packaging container from a laminate**
Verfahren zur Herstellung einer Verpackung aus einem Schichtstoff
Méthode de fabrication d'un emballage utilisant un stratifié

(30) Priority: 03.07.1995 SE 9502392
(43) Date of publication of application: 13.05.1998
(73) Proprietor: Tetra Laval Holdings & Finance SA, 1009 Pully (CH)
(72) Inventor: MAGNUSSON, Katarina, S-240 17 Södra Sandby (SE); KJELGAARD, Tom, S-223 77 Lund (SE)
(74) Representative: Petri, Stellan
(86) International application number: SE9600830
(87) International publication number: WO97002139

(56) References cited:
- EP-A- 0 414 636
- EP-A- 0 455 584
- EP-A- 0 570 222
- US-A- 4 126 262
- US-A- 4 667 454
- US-A- 4 919 984

## Description

The present invention relates to a method for the manufacturing of a dimensionally stable and impermeable packaging container by means of folding of the laminate.

The demand on a container intended for foods is that it should be easy to manufacture and handle as well as be designed and constructed in such a way that it gives the best protection possible to the products which are to be filled and transported in the container. A good product protection implies among other things that the container should be sufficiently mechanically strong and dimensionally stable in order to withstand the outer influences which the container is exposed to during normal handling without the container being deformed or destroyed. Furthermore, the container should be sufficiently physically and chemically impermeable in order to prevent transport of liquid and/or gases through the walls of the container.

Several plastic materials have been extensively used as package material for foods, among other things due to their strength and since they have different permeabilities for water vapour, oxygen gas, flavouring agents, etc. However, containers manufactured of only one material seldomly have all the desired properties for a specific application. Consequently, containers of the laminate type have been more or less tailored, the different layers of the laminate being adapted to the application in question. In this connection a laminate means a material which is constructed of more than two layers joined together, the laminate - by a combination of materials with different properties - obtaining a condition which would not be achieved with one material only.

In order to be able to use the packaging laminate in containers for e.g. light sensitive products the laminate has to be supplemented with at least one additional layer of a material with barrier properties. In this connection such a barrier layer means a laminate layer with good barrier properties against light, gases and/or flavouring agents.

Known packaging laminates comprise a base layer of paper or cardboard, which gives the container strength and dimensional stability, and an outer layer of plastic, preferably polyethylene, which gives the container the necessary impermeability properties against liquid and furthermore makes the packaging laminate heat sealable in such a way that thermoplastic layers facing each other easily can be sealed by means of surface fusion with each other during the manufacturing of containers in order to form mechanically strong and liquid impermeable sealing joints.

However, the known package material has several serious drawbacks which to a large extent and sometimes completely depend on the material used as barrier layer, i.e. a material which is completely impermeable to oxygen and which also has other barrier properties valuable for the filled product, e.g. light impermeability. Such a common barrier material is a metal foil, usually a foil of aluminium (Al foil).

When containers of the type described above are manufactured the package material is often subjected to stresses which become especially great when the material is folded. This is due to the fact that the folding of a base layer having a comparatively large thickness results in that the other layers in the laminate become substantially stretched or to a corresponding extent compressed along the folding line.

When an Al foil is folded the foil can crack when very great tensile stresses are applied. The risk that this will take place during folding increases since an Al foil applied against the inside of the laminate must be covered with one or several plastic layers, usually polyethylene, in order to prevent contact between the Al foil and the later on filled foodstuff.

The known package material also has drawbacks caused by the soaking paper or cardboard layers which rapidly loose their mechanical strength properties and make the container flabby and cumbersome when it is exposed to liquid or moisture. Furthermore, the paper or cardboard layer must be made relatively thick in order to give the container a necessary dimensional rigidity, which contributes to increasing the material load and thus the risk of crack formation in the Al foil during the manufacturing of containers.

The purpose of the present invention is thus to eliminate the above mentioned drawbacks which arise when previously known packaging laminates are folded.

In order to achieve this purpose the method according to the invention has the characterizing features of claim 1.

The packaging laminate to be used according to the invention comprises at least one thermoformable base layer, and a laminate layer arranged adjacent to the same, which laminate layer is directed towards the inside of the container contemplated.

According to the invention the packaging laminate is not composed of a usual package material of the laminate type of cardboard or paper but of a plastic material. In such a package material with a strengthening base layer of plastic a filler can be intermixed with the plastic. Such a filler can for example consist of finely ground chalk or kaolin. Thus, the base layer can consist of filled polypropylene or filled polyethylene terephthalate.

The barrier layer can also consist of an aluminium layer or a silica coating.

The laminate (heat-seal) layer can consist of polypropylene or polyethylene terephthalate.

Normally, the adhesion forces between the layers within a laminate do not develop after the manufacturing of a container. On the contrary, the properties of the laminate are deteriorated during the processing of the packaging laminate, which impairs its rigidity properties. It has surprisingly become apparent that, in contrast to those obtained from packaging laminates according to known techniques, containers made according to the method of the invention exhibit considerably improved rigidity properties. A container manufactured according to the inventive method is optimized with reference to the barrier properties.

In order to convert the packaging laminate into dimensionally stable containers according to the inventive method, the laminate is first subjected to folding. For this purpose the laminate as a package material in the form of a sheet or a web is folded in the same way as package materials which are constructed around a base layer of paper or cardboard to give the container the necessary strength and dimensional stability. This folding is accomplished by means of conventional packaging machines.

A folded stackable container is thus obtained from a plastic-based laminate.

After the packaging laminate has obtained its desired form by means of folding in a first step it is then in a subsequent step endowed with its desired mechanical rigidity. The adhesion between the layers in the packaging laminate is thus altered during the procedure for manufacturing of the completed container. In this way a container is achieved which is impermeable to liquid and gas, i.e. it possesses good barrier properties.

The adherence can for example be accomplished by means of heat lamination of the laminate layers in the form of a premanufactured film. The adherence can also be accomplished by means of pasting or extrusion. When pasting is used the paste (dissolved in water or an organic solvent) is applied on one of the layers which then is dried and pressed against the other layer. The laminate layer can also be supplied as a film or paste in the form of the above mentioned macromolecules dissolved or dispersed in a solvent, and the solvent or the dispersing agent, respectively, is then evaporated. By the choice of material in the laminate layer and the solvent or dispersing agent, the adherence can be adapted in such a way that it becomes sufficient for the further forming of the packaging laminate to a more or less completed container. The adherence by means of pasting is preferably controlled by means of varying the velocity of the laminate web through a drying oven.

An altered adhesion between the two layers in the laminate can also be accomplished by means of extrusion, i.e. one of the layers is extruded while still being melt, if necessary by means of co-extrusion, i.e. the layers are extruded at the same time. The procedure is well known to the person skilled in the art. In this respect the adhesion is also controlled by means of the velocity of the laminate web.

After the processing of the packaging laminate to the desired shape it is endowed with its desired mechanical rigidity in a subsequent step by means of exposure to heat and/or pressure. The heat treatment can be accomplished by means of moist as well as dry heat. When the adherence is performed by means of pasting dry heat is preferred, and when the adherence is performed by means of extrusion moist heat is preferred, preferably by autoclaving.

It is an advantage to form and fold a container with the desired impermeability properties for the product in question while the adherence to the laminate with a disposition to crack is low since the risk of crack formation in the packaging laminate, principally in its barrier layer, increases with increased adhesion to the laminate layer. During the subsequent step the container is locked in its final form.

When an extrusion by means of known technique is used the procedure is adapted in such a way that the laminate layer does not reach a certain temperature which depends on the extruded component in the layer in question. This can be accomplished by means of changing the extrusion velocity and/or the extrusion temperature. The laminate layer is thus applied as a hot melted paste which rapidly binds when the layers are cold.

When for example an adhesion plastic in the form of modified polypropylene as a laminate layer is extruded on a barrier layer of aluminium foil the extrusion is adapted in such a way that the plastic melts, only adherence being achieved. The fastening is then completed by means of raising the temperature for a varying period. At the same time a pressure can be applied on the package material, but this is not always necessary. In this connection an autoclave is preferably used, but an oven can also be applicable.

The use of the packaging laminate according to the invention gives extraordinary advantages. The laminate can by means of folding be used for the manufacturing of dimensionally stable impermeable packaging containers which are very suitable for use at highly extreme conditions in a humid environment including heat treatment with moist heat at a pressure above the atmospheric. Such harsh environments comprise autoclaving at temperatures and periods customary for foodstuff. This means that the laminate is also extremely suitable to be used for the manufacturing of a container which is intended to be filled with a product under aseptic conditions. In this connection the product is sterilized and filled under almost sterile conditions in a likewise sterilized container which after filling is sealed in such a way that the filled product is not reinfected by micro-organisms during storage before it is consumed.

When such a packaging procedure, a so called hotfill, is used the filling material is thus packed according to known technology while still being hot in sterilized, preferably heat sterilized containers. Such a treatment results in that the container is exposed to moist heat at a temperature of 85 °C or more.

During a subsequent cooling phase containers exposed to the above mentioned example of heat treatment will also be subjected to environments in which good sealing properties of the container are required against moisture and liquid. During the cooling phase the filling material is allowed to cool in the container manufactured from a laminate. This cooling can for example take place in a fluid bath and also by means of spraying with cool water, if necessary with an accompanying cooling with CO₂ or N₂ in order to rapidly be able to achieve a sufficiently low temperature, such as 4 °C.

## Claims

1. A method for manufacturing a packaging container which is impermeable and dimensionally stable, in which
a) a laminate is folded to the desired shape, which laminate comprises at least a thermoformable base layer, a barrier layer and, adjacent to the barrier layer, a heat-seal layer directed towards the inside of the container, the base layer consisting of filled polypropylene or filled polyethylene terephthalate, the barrier layer being selected from an aluminium layer and a silica coating, and the heat-seal layer being selected from polypropylene and polyethylene terephthalate, and
b) after folding, the laminate is subjected to autoclaving or hot filling to thereby impart the desired mechanical rigidity to the container.

2. The method as in claim 1, **characterized in that** the folded packaging container subsequently is allowed to cool in a liquid bath.

## Patentansprüche

1. Verfahren zur Herstellung eines undurchlässigen und formstabilen Verpackungsbehälters, in welchem
a) ein Laminat in die gewünschte Form gefaltet wird, wobei das Laminat mindestens eine thermoformbare Grundschicht, eine Sperrschicht und, angrenzend an die Sperrschicht, eine Heisssiegelschicht in Richtung der Innenseite des Behälters gerichtet umfasst, die Grundschicht bestehend aus gefülltem Polypropylen oder gefülltem Polyethylen Terephthalat, wobei die Sperrschicht ausgewählt ist aus einer Aluminiumschicht und einem Silikatüberzug, und wobei die Heisssiegelschicht ausgewählt ist aus Polypropylen und Polyethylen Terephthalat, und
b) nach dem Falten, das Laminat Autoklavieren oder Heissbefüllen unterzogen wird, um dadurch dem Behälter die gewünschte mechanische Steifheit zu verleihen.

2. Verfahren gemäss Anspruch 1, **dadurch gekennzeichnet, dass** es dem gefalteten Verpackungsbehälter nachträglich gestattet wird, in einem Flüssigkeitsbad abzukühlen.

## Revendications

1. Procédé pour fabriquer un contenant d'emballage qui est imperméable et dimensionnellement stable, dans lequel
a) un stratifié est plié à la forme désirée, lequel stratifié comporte au moins une couche de base thermoformable, une couche barrière et, à côté de la couche barrière, une couche de soudure à chaud orientée vers l'intérieur du contenant, la couche de base se composant de polypropylène appliqué ou de téréphtalate recouvert de polyéthylène, la couche barrière étant choisie entre une couche d'aluminium et un enduit de silice, et à la couche de soudure à chaud étant choisie entre le téréphtalate de polypropylène et de polyéthylène, et
b) après pliage, le stratifié est passé à l'autoclave ou au garnissage à chaud pour donner ainsi la rigidité mécanique désirée pour le conteneur.

2. Procédé selon la revendication 1, **caractérisé en ce qu'**on permet au contenant d'emballage plié de se refroidir ensuite dans un bain liquide.
